# EUROPÄISCHE PATENTSCHRIFT

(11) **EP 3 047 158 B1**
(45) Veröffentlichungstag und Bekanntmachung des Hinweises auf die Patenterteilung: **30.01.2019**
(21) Anmeldenummer: 14752830.1
(22) Anmeldetag: 14.08.2014
(51) Int. Cl.: F16B 5/06, F16B 21/07

(54) **CLIPVERBINDUNG**
CLIP CONNECTION
ASSEMBLAGE PAR CLIPSAGE

(30) Priorität: 18.09.2013 DE 102013218649
(43) Veröffentlichungstag der Anmeldung: 27.07.2016
(73) Patentinhaber: Bayerische Motoren Werke Aktiengesellschaft, 80809 München (DE)
(72) Erfinder: HAMMER, Maik, 84079 Bruckberg (DE); NIEKERK, Johann, 80993 München (DE)
(86) Internationale Anmeldenummer: PCT/EP2014/067380
(87) Internationale Veröffentlichungsnummer: WO 2015/039820

(56) Entgegenhaltungen:
- EP-A1- 0 584 517
- EP-A2- 1 496 270
- DE-B3-102012 206 938
- GB-A- 2 082 668
- US-A- 5 580 204
- US-A1- 2011 247 172
- US-A1- 2012 251 226

## Beschreibung

Die vorliegende Erfindung betrifft eine Clipverbindung gemäß dem Oberbegriff des Patentanspruches 1.

Eine derartige Clipverbindung ist aus der GB 2 082 668 A bekannt.

Zum technischen Hintergrund der Erfindung zählen die US 2012 251 226 A1, US 5 580 204 A, EP 584 517 A1, EP 1 496 270 A2, US 2011 247 172 A1 sowie die DE 10 2012 206 938 B3.

Aufgabe der Erfindung ist es, eine vielseitig einsetzbare Clipverbindung zu schaffen, die konstruktiv einfach aufgebaut ist und die eine Abziehkraft aufweist, die im Vergleich zur Fügekraft groß ist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist eine Clipverbindung mit einem ersten Bauteil, von dem ein "männliches Fixierelement" absteht. Das männliche Fixierelement ist in einen ersten Abschnitt und einen sich an den ersten Abschnitt anschließenden zweiten Abschnitt untergliedert. Über den ersten Abschnitt ist das männliche Fixierelement unmittelbar mit dem ersten Bauteil verbunden. Das männliche Fixierelement kann über den ersten Abschnitt z.B. einstückig mit dem ersten Bauteil verbunden sein oder an das erste Bauteil angeschweißt oder in anderer Weise mit dem ersten Bauteil verbunden sein. Der sich an den ersten Abschnitt anschließende zweite Abschnitt hat die Form einer Kugel oder eine kugelähnliche Form.

Der erste Abschnitt kann ebenfalls die Form einer Kugel oder eine kugelähnliche Form aufweisen. Dies muss aber nicht zwingend der Fall sein. Der erste Abschnitt könnte z.B. auch zapfenartig bzw. zylinderartig o.ä. ausgebildet sein. Der zweite kugelige oder kugelförmige Abschnitt steht vorzugsweise kopfartig von dem ersten Abschnitt ab.

Auf das männliche Fixierelement, insbesondere auf dessen kugeligen oder kugelähnlichen, kopfartigen ersten Abschnitt ist ein Clipelement aufgeclipst. Ein wesentlicher Gedanke der Erfindung besteht darin, dass das Clipelement mehrere in einer Umfangsrichtung des Clipelements voneinander beabstandete "Klemmbacken" aufweist, die unterhalb einer "Äquatorebene" des kugeligen oder kugelähnlichen ersten Abschnitts schräg von unten her an dem kugeligen oder kugelähnlichen ersten Abschnitt anliegen und sich dadurch einer auf das Clipelement wirkenden Abziehkraft, welche das Clipelement von dem männlichen Fixierelement abziehen möchte, widersetzen.

Unter dem Begriff "Äquatorebene" ist eine Ebene zu verstehen, die senkrecht oder im Wesentlichen senkrecht zu einer Geraden ist, die durch einen Mittelpunkt des kugeligen oder kugelähnlichen ersten Abschnitts verläuft und die senkrecht oder im Wesentlichen senkrecht zu einer Tangentialebene des ersten Bauteils im Aufstandspunkt des männlichen Fixierelements auf dem ersten Bauteil ist. Anders ausgedrückt enthält die Äquatorebene einen größten Durchmesser des kugeligen oder kugelähnlichen ersten Abschnitts.

Da die Klemmbacken unterhalb der Äquatorebene des kugeligen oder kugelähnlichen ersten Abschnitts an dem männlichen Fixierelement anliegen, ergibt sich ein Formschluss bzw. ein Hinterschnitt der Klemmbacken des Clipelements in Bezug auf das männliche Fixierelement. Die Klemmbacken widersetzen sich somit einer auf das Clipelement wirkenden Abziehkraft, welche das Clipelement von dem männlichen Fixierelement abziehen möchte.

Mittels eines derartigen Clipelements können unterschiedlichste mit dem Clipelement verbundene Bauteile oder Komponenten an dem vom ersten Bauteil abstehenden männlichen Fixierelement befestigt werden.

Alternativ oder ergänzend dazu kann ein zweites Bauteil vorgesehen sein, welches ein Durchgangsloch aufweist, durch das sich das von dem ersten Bauteil abstehende männliche Fixierelement hindurch erstreckt. Der erste Abschnitt des männlichen Fixierelements sollte vorzugsweise mindestens so lang sein, dass der kugelige oder kugelähnliche zweite Abschnitt des männlichen Fixierelements sich vollständig oder nahezu vollständig auf der dem ersten Bauteil abgewandten Seite des zweiten Bauteils befindet. Mittels des Clipelements können das erste Bauteil und das zweite Bauteil zusammengeklemmt oder zumindest lose miteinander verbunden werden, derart, dass sich das Clipelement einem Abziehen des zweiten Bauteils von dem von dem ersten Bauteil abstehenden männlichen Fixierelement widersetzt.

Nach einer Weiterbildung der Erfindung weist das Clipelement einen schirmringartigen Abschnitt auf, der von einem unteren Bereich der Klemmbacken absteht, z.B. schräg nach unten, d.h. in Richtung des ersten Bauteils. Der schirmringartige Abschnitt ist somit vergleichbar mit der von einem Hutmittelteil schräg nach unten abstehenden Hutkrempe.

Sofern das Clipelement dazu vorgesehen ist, ein zweites, mit einem Durchgangsloch versehenes Bauteil an dem vom ersten Bauteil abstehenden männlichen Fixierelement zu fixieren, kann vorgesehen sein, dass zumindest der schirmringartige Abschnitt des Clipelements in einem durchgangslochnahen Bereich des zweiten Bauteils an einer dem ersten Bauteil abgewandten Seite des zweiten Bauteils an dem zweiten Bauteil anliegt. Der schirmringartige Abschnitt des Clipelements übergreift somit das Durchgangsloch, was dazu führt, dass sich das Clipelement einem Abziehen des zweiten Bauteils von dem ersten Bauteil bzw. von dem von dem ersten Bauteil abstehenden männlichen Fixierelement widersetzt.

Ein wesentlicher Vorteil der Erfindung ist darin zu sehen, dass eine auf das zweite Bauteil wirkende Abziehkraft sich auf den schirmringartigen Abschnitt des Clipelements überträgt und in ein Biegemoment umgesetzt wird, welches die Klemmbacken des Clipelements gegen den kugeligen oder kugelähnlichen ersten Abschnitt des männlichen Fixierelements presst, wodurch sich eine der Abziehbewegung entgegenwirkende Selbsthemmung ergibt.

Nach einer Weiterbildung der Erfindung sind die einzelnen Klemmbacken des Clipelements gleichmäßig in Umfangsrichtung des Clipelements verteilt angeordnet. Die Klemmbacken sind durch Klemmbackenschlitze voneinander getrennt. Es kann vorgesehen sein, dass die einzelnen Klemmbacken gleich groß sind, d.h. dass sich die einzelnen Klemmbacken jeweils über gleich große Umfangsabschnitte des kugeligen oder kugelähnlichen ersten Abschnitts des männlichen Fixierelements erstrecken.

Die Klemmbackenschlitze erstrecken sich von einer dem schirmringärtigen Abschnitt abgewandten Oberseite der Klemmbacken bis zu dem schirmringartigen Abschnitt nach unten.

Der schirmringartige Abschnitt weist in Umfangsrichtung des Clipelements voneinander beabstandete Schirmringschlitze auf, die sich in einer Radialrichtung des Clipelements erstrecken. Zwischen zwei in Umfangsrichtung aufeinander folgenden Schirmringschlitzen ist jeweils ein Schirmringlappen angeordnet.

Nach einer Weiterbildung der Erfindung ist es von Vorteil, wenn die Schirmringschlitze in Umfangsrichtung des Clipelements betrachtet versetzt zu den Klemmbackenschlitzen angeordnet sind. Dadurch wird erreicht, dass eine auf die Schirmringlappen wirkende Abziehkraft in ein die Klemmbacken an den kugeligen oder kugelähnlichen ersten Abschnitt anpressendes, selbsthemmendes Biegemoment umgesetzt wird.

Ferner kann vorgesehen sein, dass sich jeder der Schirmringlappen in Umfangsrichtung betrachtet jeweils über die Hälfte eines ersten Klemmbackens und über die Hälfte eines in Umfangsrichtung auf den ersten Klemmbacken folgenden nächsten bzw. zweiten Klemmbacken erstreckt. Versuche haben ergeben, dass es von Vorteil ist, wenn mindestens drei Klemmbacken und Klemmbackenschlitze vorgesehen sind. Besonders vorteilhaft erscheinen Clipelemente, die vier Klemmbacken und vier Klemmbackenschlitze aufweisen. Dementsprechend ist es von Vorteil, wenn das Clipelement mindestens drei, insbesondere genau vier Schirmringschlitze und Schirmringlappen aufweist.

Wie eingangs bereits erwähnt, ist die Erfindung auf unterschiedlichsten Technologiegebieten, wie z.B. dem Fahrzeugkarosseriebau, Möbelbau, Bereich "weiße Ware" etc. einsetzbar. Dementsprechend kann das männliche Fixierelement, z.B. aus Metall, insbesondere aus Stahl, bestehen. Prinzipiell kann das männliche Fixierelement aber auch aus Kunststoff oder aus einem anderen Material wie z.B. Holz bestehen. Das männliche Fixierelement kann, wie bereits erwähnt, einstückig mit dem ersten Bauteil verbunden sein oder mit diesem verschweißt oder in anderer Weise an dem ersten Bauteil verbunden sein.

Das Clipelement kann aus Kunststoff hergestellt sein, der eine gewisse Biegeelastizität aufweist, die zumindest so groß ist, dass das Clipelement unter elastsicher Verformung auf das männliche Fixierelement aufclipsbar ist, wobei sich die Schrimringlappen und die Klemmbacken in gewissem Umfang biegeelastisch verschwenken lassen. Bei dem Clipelement kann es sich insbesondere um ein Spritzgussteil handeln.

Im Folgenden wird die Erfindung im Zusammenhang mit der Zeichnung näher erläutert. Es zeigen:
- Fig. 1: zwei Varianten eines ersten Ausführungsbeispiels gemäß der Erfindung;
- Fig. 2: das Prinzip der Selbsthemmung beschrieben anhand einer der beiden in Fig. 1 gezeigten Varianten;
- Fig. 3-6: verschiedene Darstellungen des in Fig. 2 gezeigten Clipelements; und
- Fig. 7: ein konkretes Anwendungsbeispiel für eine Bauteilverbindung gemäß der Erfindung.

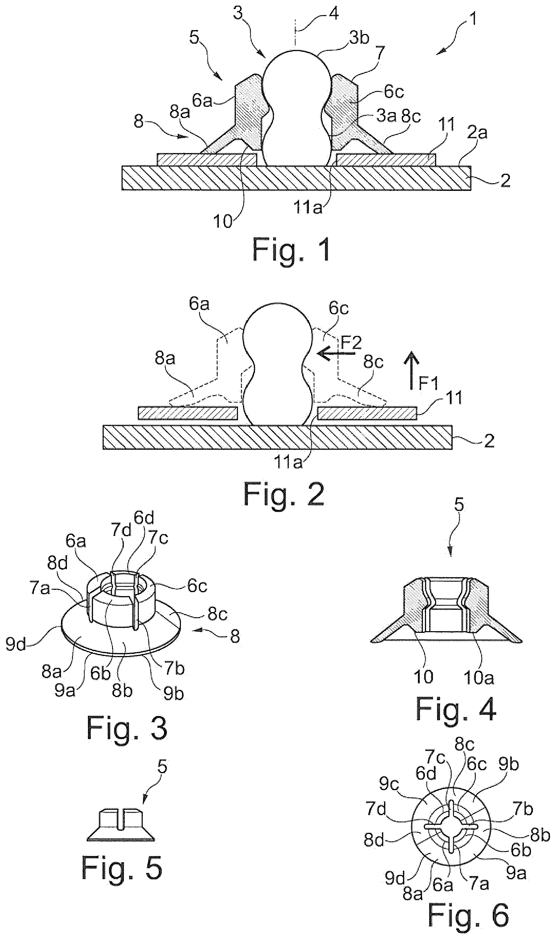

Fig. 1 zeigt eine Bauteilverbindung 1 mit einem ersten Bauteil 2, bei dem es sich bspw. um ein Blechbauteil handeln kann. Bei dem ersten Bauteil 2 kann es sich z.B. um ein Bauteil einer Fahrzeugkarosserie (Fahrzeugkarosseriebauteil) handeln. Alternativ dazu kann es sich bei dem ersten Bauteil auch um ein Kunststoffbauteil, insbesondere aus faserverstärktem Kunststoff (z.B. Kohlefaserverstärktem Kunststoff) handeln.

Von dem ersten Bauteil 2 steht ein männliches Fixierelement 3 ab, welches einen ersten kugeligen oder kugelähnlichen Abschnitt 3a und einen sich daran anschließenden zweiten kugeligen oder kugelähnlichen Abschnitt 3b aufweist. Die beiden kugeligen oder kugelähnlichen Abschnitte 3a, 3b können bspw. durch zwei miteinander verschweißte Metallkugeln gebildet sein (so genannte "Doppelkugel"). Der erste kugelige oder kugelähnlichen Abschnitt 3a kann auf eine Oberseite 2a des ersten Bauteils 2 aufgeschweißt oder in anderer Weise mit dem ersten Bauteil 2 verbunden sein.

In Fig. 1 ist ferner eine Normale 4 eingezeichnet, die sich durch die Mittelpunkte der beiden kugeligen oder kugelähnlichen Abschnitte 3a, 3b erstreckt und die senkrecht zur Tangentialebene des ersten Bauteils 2 im Aufstandspunkt (der Mittelpunkt der Aufstandsfläche) des ersten kugeligen Abschnitts 3a auf dem ersten Bauteil 2 ist.

Auf das männliche Fixierelement 3 oder - genauer gesagt - auf den zweiten kugeligen oder kugelähnlichen Abschnitt 3b des männlichen Fixierelements 3 ist ein Clipelement 5 aufgeclipst. Das Clipelement 5 weist vier gleichmäßig große, in Umfangsrichtung verteilt angeordnete Klemmbacken 6a, 6b, 6c, 6d auf (vgl. Fig. 3, 6).

Wie am besten aus Fig. 1 ersichtlich ist, liegen die Klemmbacken 6a-6d schräg von unten her, d.h. unterhalb einer Äquatorebene 7 des ersten Abschnitts 3b an dem ersten Abschnitt 3b an. Die (inneren) Anlageflächen der Klemmbacken 6a-6d sind kugelförmig oder kugelähnlichen konkav und somit komplementär zur Außenkontur des ersten Abschnitts 3b ausgebildet, so dass sich relativ große Anlageflächen ergeben.

Wie z.B. aus den Fig. 3 und 6 ersichtlich ist, sind die einzelnen Klemmbacken 6a, 6b, 6c, 6d durch Klemmbackenschlitze 7a, 7b, 7c, 7d "voneinander getrennt", die sich von einer Oberseite der Klemmbacken bis zu einem schirmringartigen Abschnitt 8 nach unten erstrecken. Dadurch ist sichergestellt, dass die Klemmbacken 6a, 6b, 6c, 6d unabhängig voneinander radial nach innen bzw. außen federn können.

Der schirmringartige Abschnitt 8 ist gebildet durch schräg nach unten von den Klemmbacken 6a-6d abstehende Schirmringlappen 8a, 8b, 8c, 8d (vgl. Fig. 3, 6). Die einzelnen Schirmringlappen 8a-8d sind jeweils durch sich radial erstreckende Schirmringschlitze 9a, 9b, 9c, 9d (vgl. Fig. 3, 6) voneinander getrennt. Die Schirmringlappen 8a-8d können somit ebenfalls unabhängig voneinander Federbewegungen ausführen.

In der linken Hälfte des in Fig. 1 gezeigten Querschnitts weist das Clipelement 5 einen nasenartigen Abschnitt 10 auf, der sich bis in einen Bereich der Äquatorebene des ersten Abschnitts 3a, d.h. bis in einen mittleren Bereich des ersten Abschnitts 3a nach unten erstreckt und von außen her an dem ersten Abschnitt 3a anliegt. Ein derartiger nasenartiger Abschnitt 10 kann vorgesehen sein, muss aber nicht unbedingt vorgesehen sein. Vielmehr kann, wie im rechten Teil des in Fig. 1 gezeigten Querschnitts des Clipelements dargestellt, auch auf einen derartigen nasenartigen Abschnitt verzichtet werden.

Wenn kein derartiger nasenartiger Abschnitt vorgesehen ist und, wie im rechten Teil der Fig. 1 dargestellt ist, eine "durchgehende kegelige Fläche" vorgesehen ist, wird bei der Montage ein "Einschwimmen" des Clipelements erleichtert, was insbesondere dann von Vorteil ist, wenn das männliche Fixierelement "ungenau" gestaltet oder angeordnet ist.

Wie aus den Fig. 1, 2 ersichtlich ist, ist auf das erste Bauteil 2 ein zweites Bauteil 11 aufgesetzt, das ein Durchgangsloch 11a aufweist. Bei dem zweiten Bauteil 11 kann es sich z.B. um ein Bauteil einer Fahrzeugkarosserie (Fahrzeugkarosseriebauteil) handeln.

Das männliche Fixierelement 3 erstreckt sich durch das Durchgangsloch 11a hindurch. Die in Richtung der Normalen 4 gemessene Länge des männlichen Fixierelements ist hier derart bemessen, dass der zweite Abschnitt 3b des männlichen Fixierelements vollständig auf der dem ersten Bauteil 2 abgewandten Seite des zweiten Bauteils 11 zu liegen kommt. Bei dem in den Fig. 1 und 2 gezeigten Ausführungsbeispiel steht der zweite Abschnitt 3b sogar ein Stück weit von der dem ersten Bauteil 2 abgewandten Seite des zweiten Bauteils 11 ab, wodurch ermöglicht wird, dass die Klemmbacken 6a-6d schräg von unten her und unterhalb der Äquatorebene 7 am Außenumfang des zweiten Abschnitts 3b anliegen.

Fig. 2 zeigt einen Zustand, bei dem auf das zweite Bauteil 11 eine das zweite Bauteil 11 vom ersten Bauteil 2 wegziehende "Abziehkraft F1" ausgeübt wird. Da die Schirmringlappen 8a-8d an der dem ersten Bauteil 2 abgewandten Seite des zweiten Bauteils 11 anliegen, überträgt sich die Abziehkraft F1 auf die Schirmringlappen 8a-8d. Die Abziehkraft F1 wird in Andrückkräfte F2 bzw. in Andrückmomente umgesetzt, welche die Klemmbacken 6a-6d gegen den ersten Abschnitt 3b des männlichen Fixierelements 3 drücken. Je größer die Abziehkraft F1 ist, umso größer werden die Andrückkräfte bzw. Andrückmomente, wodurch eine Selbsthemmung eintritt. Die Klemmbacken 6a-6d widersetzen sich somit einem Abziehen des Clipelements 5 von dem männlichen Fixierelement 3.

Vorzugsweise ist das Clipelement 5 aus einem elastischen Kunststoff hergestellt. Ein Clipelement 5, wie es in den Fig. 1-6 gezeigt ist, weist eine Fügekraft (Kraft, die zum Aufclipsen auf das männliche Fixierelement 3 erfordelich ist) auf, die wesentlich geringer ist, als die Abziehkraft, die zum Abziehen des Clipelements 5 von dem männlichen Fixierelement 3 erforderlich ist. Bei der in den Fig. 1-6 gezeigten Gestaltung des Clipelements 5 kann dieses im Prinzip, d.h. ohne Verwendung eine Spezialwerkzeugs, nur durch Zerstören des Clipelements 5 von dem männlichen Fixierelement 3 abgezogen werden.

Vollständigkeitshalber seien noch die Fig. 4 und 5 erwähnt.

Fig. 4 zeigt einen Querschnitt eines Clipelements 5 mit Rastnasen 10, 10a.

Fig. 5 zeigt eine Seitenansicht des Clipelements 5.

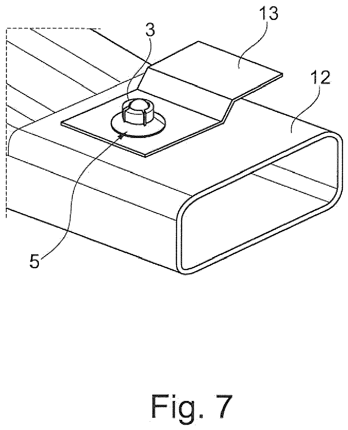

Fig. 7 zeigt eine Bauteilverbindung gemäß der Erfindung. An ein rechteckrohrartiges Strukturelement 12 eines hier nicht näher dargestellten Fahrzeugs ist ein männliches Fixierelement 3 angeschweißt. Auf das männliche Fixierelement 3 ist ein Blechhalter 13 aufgesetzt, der mittels eines Clipelements 5 an dem männlichen Fixierelement 3 festgeclipst ist.

## Patentansprüche

1. Clipverbindung (1), mit
- einem ersten Bauteil (2),
- einem männlichen Fixierelement (3), das von dem ersten Bauteil (2) absteht, wobei das männliche Fixierelement (3) einen ersten, unmittelbar mit dem ersten Bauteil (2) verbundenen Abschnitt (3a) und einen sich an den ersten Abschnitt (3a) anschließenden, zweiten, kugeligen oder kugelähnlichen Abschnitt (3b) aufweist, und
- einem Clipelement (5), das auf das männliche Fixierelement (3) aufgeclipst ist, wobei
- das Clipelement (5) mehrere in einer Umfangsrichtung des Clipelements (5) voneinander beabstandete Klemmbacken (6a-6d) aufweist, die unterhalb einer Äquatorebene (7) des kugeligen oder kugelähnlichen Abschnitts (3b) von unten her an dem kugeligen oder kugelähnlichen Abschnitt (3b) anliegen und sich dadurch einer auf das Clipelement (5) wirkenden Abziehkraft, welche das Clipelement (5) von dem männlichen Fixierelement (3) abziehen möchte, widersetzen, und
- die Klemmbacken (6a-6d) durch Klemmbackenschlitze (7a-7d) voneinander getrennt sind,
**dadurch gekennzeichnet, dass**
• sich die Klemmbackenschlitze (7a-7d) von einer Oberseite der Klemmbacken (6a-6d) bis zu einem schirmringartigen Abschnitt (8) erstrecken und
• der schirmringartige Abschnitt (8) in Umfangsrichtung des Clipelements (5) voneinander beabstandete Schirmringschlitze (9a-9d) aufweist, die sich in einer Radialrichtung des Clipelements (5) erstrecken, wobei zwischen zwei in Umfangsrichtung aufeinander folgenden Schirmringschlitzen (9a-9d) jeweils ein Schirmringlappen (8a-8d) vorgesehen ist.

2. Clipverbindung nach Anspruch 1, **dadurch gekennzeichnet, dass** das Clipelement (5) den schirmringartigen Abschnitt (8) aufweist, der von einem unteren Bereich der Klemmbacken (6a-6d) absteht.

3. Clipverbindung nach Anspruch 1 oder 2, **dadurch gekennzeichnet, dass** die Schirmringschlitze (9a-9d) in Umfangsrichtung des Clipelements 5 betrachtet versetzt zu den Klemmbackenschlitzen (7a-7d) angeordnet sind.

4. Clipverbindung nach einem der Ansprüche 1 bis 3, **dadurch gekennzeichnet, dass** sich jeder der Schirmringlappen (8a-8d) in Umfangsrichtung betrachtet jeweils über die Hälfte eines ersten Klemmbacken (6a-6d) und über die Hälfte eines in Umfangsrichtung auf den ersten Klemmbacken (6a-6d) folgenden zweiten Klemmbackens (6a-6d) erstreckt.

5. Clipverbindung nach einem der Ansprüche 1 bis 4, **dadurch gekennzeichnet, dass** das Clipelement (5) mindestens drei, insbesondere genau vier Klemmbacken (6a-6d) und Klemmbackenschlitze (7a-7d) aufweist.

6. Clipverbindung nach einem der Ansprüche 1 bis 5, **dadurch gekennzeichnet, dass** das Clipelement (5) mindestens drei, insbesondere genau vier Schirmringschlitze (9a-9d) und Schirmringlappen (8a-8d) aufweist.

7. Clipverbindung nach einem der Ansprüche 1 bis 6, **dadurch gekennzeichnet, dass** ein zweites Bauteil (11) vorgesehen ist, welches ein Durchgangsloch (11a) aufweist, wobei sich das männliche Fixierelement (3) durch das Durchgangsloch (11a) hindurch erstreckt.

8. Clipverbindung nach Anspruch 7, **dadurch gekennzeichnet, dass** zumindest der schirmringartige Abschnitt (8) des Clipelements (5) in einem durchgangslochnahen Bereich des zweiten Bauteils (11) an einer dem ersten Bauteil (2) abgewandten Seite des zweiten Bauteils (11) an dem zweiten Bauteil (11) anliegt und sich einem Abziehen des zweiten Bauteils (11) von dem ersten Bauteil (2) widersetzt, wobei eine auf das zweite Bauteil (11) wirkende Abziehkraft (F1) in den Schirmringlappen (8a-8d) ein Biegemoment erzeugt, welches die Klemmbacken (6a-6d) gegen den kugeligen oder kugelähnlichen Abschnitt (3b) des männlichen Fixierelements (3) presst und somit selbsthemmend wirkt.

9. Clipverbindung nach einem der Ansprüche 1 bis 8, **dadurch gekennzeichnet, dass** der erste Abschnitt (3a) die Form einer Kugel oder eine kugelähnliche Form aufweist und somit das männliche Fixierelement (3) durch zwei miteinander verbundene, insbesondere miteinander verschweißte, Kugeln oder kugelige Elemente gebildet ist.

10. Clipverbindung nach einem der Ansprüche 1 bis 9, **dadurch gekennzeichnet, dass** das männliche Fixierelement (3) aus Metall, insbesondere aus Stahl, besteht.

11. Clipverbindung nach einem der Ansprüche 1 bis 10, **dadurch gekennzeichnet, dass** das männliche Fixierelement (3) mit dem ersten Bauteil (2) verschweißt ist.

12. Clipverbindung nach einem der Ansprüche 1 bis 11, **dadurch gekennzeichnet, dass** das Clipelement (5) aus Kunststoff besteht.

## Claims

1. A clip connection (1), having
- a first component (2),
- a male fixing element (3) which projects from the first component (2), wherein the male fixing element (3) has a first portion (3a) connected directly to the first component (2) and a second, spherical or sphere-like, portion (3b) adjoining the first portion (3a), and
- a clip element (5) which is clipped onto the male fixing element (3), wherein
- the clip element (5) has a plurality of clamping jaws (6a - 6d) spaced apart from each other in a peripheral direction of the clip element (5), which jaws beneath an equatorial plane (7) of the spherical or sphere-like portion (3b) bear from below against the spherical or sphere-like portion (3b) and thereby oppose a pull-off force acting on the clip element (5) which attempts to pull the clip element (5) off from the male fixing element (3), and
- the clamping jaws (6a - 6d) are separated from each other by clamping-jaw slots (7a - 7d),
**characterised in that**
• the clamping-jaw slots (7a - 7d) extend from an upper side of the clamping jaws (6a - 6d) as far as a shield-ring-like portion (8), and
• the shield-ring-like portion (8) has shield ring slots (9a - 9d) spaced apart from one another in the peripheral direction of the clip element (5), which slots extend in a radial direction of the clip element (5), with a shield ring lobe (8a - 8d) being provided between two successive shield ring slots (9a - 9d) in the peripheral direction in each case.

2. A clip connection according to Claim 1, **characterised in that** the clip element (5) has the shield-ring-like portion (8) which projects from a lower region of the clamping jaws (6a - 6d).

3. A clip connection according to Claim 1 or Claim 2, **characterised in that** the shield ring slots (9a - 9d), viewed in the peripheral direction of the clip element (5), are arranged offset to the clamping-jaw slots (7a - 7d).

4. A clip connection according to one of Claims 1 to 3, **characterised in that** each of the shield ring lobes (8a - 8d), viewed in the peripheral direction, extends in each case over half of a first clamping jaw (6a - 6d) and over half of a second clamping jaw (6a - 6d) which follows the first clamping jaw (6a - 6d) in the peripheral direction.

5. A clip connection according to one of Claims 1 to 4, **characterised in that** the clip element (5) has at least three, especially exactly four, clamping jaws (6a - 6d) and clamping-jaw slots (7a - 7d).

6. A clip connection according to one of Claims 1 to 5, **characterised in that** the clip element (5) has at least three, especially exactly four, shield ring slots (9a - 9d) and shield ring lobes (8a - 8d).

7. A clip connection according to one of Claims 1 to 6, **characterised in that** a second component (11) is provided which has a through-hole (11a), the male fixing element (3) extending through the through-hole (11a).

8. A clip connection according to Claim 7, **characterised in that** at least the shield-ring-like portion (8) of the clip element (5) in a region of the second component (11) which is close to the through-hole, on a side of the second component (11) which is remote from the first component (2), bears against the second component (11) and opposes pulling-off of the second component (11) from the first component (2), with a pull-off force (F1) acting on the second component (11) generating a bending moment in the shield ring lobes (8a - 8d) which presses the clamping jaws (6a - 6d) against the spherical or sphere-like portion (3b) of the male fixing element (3) and thus having a self-locking effect.

9. A clip connection according to one of Claims 1 to 8, **characterised in that** the first portion (3a) is in the form of a sphere or has a sphere-like form and thus the male fixing element (3) is formed by two spheres or spherical elements connected together, in particular welded together.

10. A clip connection according to one of Claims 1 to 9, **characterised in that** the male fixing element (3) consists of metal, especially of steel.

11. A clip connection according to one of Claims 1 to 10, **characterised in that** the male fixing element (3) is welded to the first component (2).

12. A clip connection according to one of Claims 1 to 11, **characterised in that** the clip element (5) comprises plastics material.

## Revendications

1. Assemblage par clipsage (1) comprenant :
- un premier composant (2),
- un élément de fixation mâle (3) qui dépasse du premier composant (2), l'élément de fixation mâle (3) comprenant un premier segment (3a) directement relié au premier composant (2) et un second segment (3b) sphérique ou sphéroïdal se connectant au premier segment (3a), et
- un élément de clipsage (5) qui est clipsé sur l'élément de fixation mâle (3),
- l'élément de clipsage (5) comprenant plusieurs mâchoires de serrage (6a-6d) situées à distance les unes des autres dans la direction périphérique de l'élément de clipsage (5), et qui s'appliquent, par le bas, sur le segment sphérique ou sphéroïdal (3b), au-dessous du plan équatorial (7) de ce segment sphérique ou sphéroïdal (3b) et s'opposent ainsi à une force d'arrachement agissant sur l'élément de clipsage (5) qui pourrait dégager cet élément de clipsage (5) de l'élément de fixation mâle (3), et
- les mâchoires de serrage (6a-6d) sont séparées les unes des autres par des fentes de mâchoires de serrage (7a-7d),
**caractérisé en ce que**
les fentes des mâchoires de serrage (7a-7d) s'étendent de la face supérieure des mâchoires de serrage (6a-6d) jusqu'à un segment en forme de bague parapluie (8), et
le segment en forme de bague parapluie (8) comporte, dans la direction périphérique de l'élément de clipsage (5) des fentes de bagues parapluie (9a-9d) situées à distance les unes des autres qui s'étendent dans la direction radiale de l'élément de clipsage (5), et, il est respectivement prévu entre deux fentes de bague parapluie successives dans la direction périphérique (9a-9d) une languette de bague parapluie (8a-8d-).

2. Assemblage par clipsage conforme à la revendication 1,
**caractérisé en ce que**
l'élément de clipsage (5) comporte le segment (8) en forme de bague parapluie qui s'écarte de la zone inférieure des mâchoires de serrage (6a-6d).

3. Assemblage par clipsage conforme à la revendication 1 ou 2, **caractérisé en ce que**
les fentes de la bague parapluie (9a, 9d) sont décalées par rapport aux fentes des mâchoires de serrage (7a-7d) dans la direction périphérique de l'élément de clipsage (5).

4. Assemblage par clipsage conforme à l'une des revendications 1 à 3, **caractérisé en ce que**
chacune des languettes (8a-8d) de la bague parapluie s'étend dans la direction périphérique sur la moitié d'une première mâchoire de serrage (6a-6d) et sur la moitié d'une seconde mâchoire de serrage (6a-6d) suivant la première mâchoire de serrage (6a-6d) dans la direction périphérique.

5. Assemblage par clipsage conforme à l'une des revendications 1 à 4, **caractérisé en ce que**
l'élément de clipsage (5) comporte au moins trois et en particulier exactement quatre mâchoires de serrage (6a-6d) et fentes de mâchoires de serrage (7a-7d).

6. Assemblage par clipsage conforme à l'une des revendications 1 à 5, **caractérisé en ce que**
l'élément de clipsage (5) comporte au moins trois et en particulier exactement quatre fentes de la bague parapluie (9a-9d) et languettes de la bague parapluie (8a-8d).

7. Assemblage par clipsage conforme à l'une des revendications 1 à 6, **caractérisé en ce qu'**
il est prévu un second composant (11) qui comporte un perçage traversant (11a), l'élément de fixation mâle (3) s'étendant au travers de ce perçage traversant (11a).

8. Assemblage par clipsage conforme à la revendication 7,
**caractérisé en ce qu'**
au moins le segment (8) en forme de bague parapluie de l'élément de clipsage (5) s'applique, sur le second composant (11) dans une zone proche du perçage traversant de ce second composant (11), sur la face de celui-ci située à l'opposé du premier composant (2), et s'oppose à un arrachement du second composant (11) du premier composant (2), une force d'arrachement (F1) agissant sur le second composant (11) produisant dans les languettes de la bague parapluie (8a-8d) un couple de flexion qui comprime les mâchoires de serrage (6a-6d) contre le segment sphérique ou sphéroïdal (3b) de l'élément de fixation mâle (3) et agit ainsi par autoblocage.

9. Assemblage par clipsage conforme à l'une des revendications 1 à 8,
**caractérisé en ce que**
le premier segment (3a) a la forme d'une sphère ou une forme sphéroïdale, et ainsi l'élément de fixation mâle (3) est formé par deux sphères ou deux éléments sphéroïdaux reliés l'un à l'autre, et en particulier soudés l'un à l'autre.

10. Assemblage par clipsage conforme à l'une des revendications 1 à 9,
**caractérisé en ce que**
l'élément de fixation mâle (3) est réalisé en métal, en particulier en acier.

11. Assemblage par clipsage conforme à l'une des revendications 1 à 10,
**caractérisé en ce que**
l'élément de fixation mâle (3) est soudé au premier composant (2).

12. Assemblage par clipsage conforme à l'une des revendications 1 à 11,
**caractérisé en ce que**
l'élément de clipsage (5) est réalisé en matériau synthétique.
